# EUROPEAN PATENT SPECIFICATION

(11) **EP 2 889 327 B1**
(45) Date of publication and mention of the grant of the patent: **21.09.2016**
(21) Application number: 14194308.4
(22) Date of filing: 21.11.2014
(51) Int. Cl.: C08L 9/00, C08K 3/36, C08K 5/54, C08K 5/541, C08K 5/548, C08L 9/06, B60C 1/00

(54) **Rubber composition for use in a tread of a pneumatic tire**
Gummizusammensetzung zur Verwendung in der Lauffläche eines Luftreifens
Composition de caoutchouc pour une utilisation dans une bande de roulement d'un pneumatique

(30) Priority: 27.11.2013 US 201361909693 P
(43) Date of publication of application: 01.07.2015
(73) Proprietor: The Goodyear Tire & Rubber Company, Akron, Ohio 44316 (US)
(72) Inventor: Jung, Manfred Josef, 66629 Freisen (DE); Piret, Jean-Paul, 9176 Niederfeulen (LU); Kanz, Carlo, 8249 Mamer (LU); Villamizar, William Urbano, 7521 Mersch (LU); Klinkenberg, Maurice Peter, 9188 Vichten (LU); Engeldinger, Eric, 8508 Rédange/Attert (LU)
(74) Representative: Kutsch, Bernd

(56) References cited:
- EP-A1- 1 426 408
- EP-A1- 1 518 895
- EP-A1- 2 412 544
- EP-A1- 2 607 098
- US-A1- 2006 063 879
- US-A1- 2008 161 475
- US-A1- 2012 065 316
- Goodyear International Corporation: "PRODUCT DATA SHEET - BUDENE (RTM) 1207/1208", iNTERNET (GOOGLE) , 2012, XP002740785, Akron, Ohio, USA Retrieved from the Internet: URL:http://www.goodyearchemical.com/pdf/Bu d1207_Bud1208.pdf [retrieved on 2015-06-10]

## Description

### Background of the Invention

Rubber compositions for tires conventionally contain at least one diene-based elastomer where the rubber composition may be reinforced with reinforcing filler such as, for example, at least one of carbon black and precipitated silica.

Silica is hydrophilic in nature which promotes filler-filler interaction within the rubber composition and tends to resist filler-polymer interaction within the rubber composition resulting in poor dispersion of the silica particles within the rubber composition.

The hydrophilic silica is typically coupled to the elastomer in the rubber composition by use of a silica coupling agent having a moiety reactive with hydroxyl groups on the precipitated silica and another moiety which is interactive with the elastomer in the rubber composition.

Reduced filler-filler interaction is promoted by pre-hydrophobating the hydrophilic silica by pre-treating the silica prior to its addition to the rubber composition with at least one of alkylsilane, alkoxysilane and aforesaid silica coupling agent containing an alkoxysilane to react with hydroxyl groups on the precipitated silica. A portion of the hydroxyl groups on the precipitated silica are therefore pre-obligated with the alkylsilane groups which will not couple or bond to a diene based polymer. Where the pre-treatment also contains a silica coupling agent, the pre-treated precipitated silica may interact directly with elastomer(s) via the contained coupling agent on the precipitated silica without addition of a silica coupling agent to the rubber composition itself.

Improved filler-polymer interaction may also be promoted by use of a functionalized elastomer containing functional groups reactive with hydroxyl groups on the silica. In this manner the functional groups on the elastomer may be relied upon to react with hydroxyl groups on the silica to thereby promote its coupling to the elastomer in the rubber composition.

Hydrophilic silica such as hydrophilic precipitated silica may be hydrophobated by treatment with various alkoxysilane containing compounds, for example silica coupling agents, which react with hydroxyl groups on the silica in situ within such rubber compositions. Alkoxysilane based compounds which are not silica coupling agents may also be used for such purpose.

Alternatively, the hydrophilic silica or precipitated silica may be hydrophobated by pre-treatment with various alkoxysilane based silica coupling agents, alkoxysilanes which are not silica coupling agents, or their combination, to render the precipitated silica more hydrophobic prior to introduction to such rubber compositions. For example, US-A- 5,698,619.

It has been observed that such pre-hydrophobation of the silica with a combination of alkoxyorganomercaptosilane and alkylsilane (e.g. alkoxysilane) prior to its addition to the uncured rubber composition has dramatically reduced the resulting low strain stiffness of sulfur cured rubber composition in a sense of reducing its storage modulus (G') at strains below 50 percent as compared to a rubber composition containing the functionalized elastomer where the silica is hydrophobated in situ within the rubber composition instead of being pre-hydrophobated prior to addition to the rubber composition.

Accordingly, a challenge is presented for undertaking an evaluation of how to enhance (increase) such low strain stiffness property of the rubber composition containing the functionalized elastomer and the pre-hydrophobated silica.

US-A-2006/0063879 and EP-A-2 412 544 each describe a rubber composition in accordance with the preamble of claim 1.

### Summary of the Invention

The invention relates to a rubber composition in accordance with claim 1, a tire tread in accordance with claim 10 and a pneumatic tire in accordance with claim 11.

Dependent claims refer to preferred embodiments of the invention.

In one aspect of the invention, the present invention is directed to a pneumatic tire comprising a tread, the tread comprising a rubber composition comprising:
from 20 to 90 parts by weight per 100 parts by weight of rubber (phr) of solution polymerized styrene-butadiene rubber;
from 10 to 80 phr of polybutadiene rubber, wherein from 0 to 20 weight percent, alternatively 5 to 15 weight percent, of the polybutadiene rubber is a syndiotactic polybutadiene rubber comprising at least 70 percent of monomeric units in syndiotactic 1,2 configuration and the balance of the polybutadiene rubber comprises at least 90 percent of monomeric units in cis-1,4 configuration; and
from 50 to 150 phr of pre-hydrophobated silica or precipitated silica wherein the pre-hydrophobated silica or precipitated silica is hydrophobated prior to its addition to the rubber composition by treatment with at least one silane selected from the group consisting of alkylsilanes, alkoxysilanes, organoalkoxysilyl polysulfides and organomercaptoalkoxysilanes;
wherein the polybutadiene rubber contains from 10 to 20 phr of syndiotactic polybutadiene rubber, with the balance of the polybutadiene made up of cis 1,4-polybutadiene rubber.

### Detailed Description

There is disclosed a pneumatic tire comprising a tread, the tread comprising a rubber composition comprising
from 20 to 90 parts by weight per 100 parts by weight of rubber (phr) of solution polymerized styrene-butadiene rubber,
from 10 to 80 phr of polybutadiene rubber, wherein from 0 to 20 weight percent of the polybutadiene rubber is a syndiotactic polybutadiene rubber comprising at least 70 percent of monomeric units in syndiotactic 1,2 configuration and the balance of the polybutadiene rubber comprises at least 90 percent of monomeric units in cis-1,4 configuration; and
from 50 to 150 phr of pre-hydrophobated precipitated silica wherein the pre-hydrophobated precipitated silica is hydrophobated prior to its addition to the rubber composition by treatment with at least one silane selected from the group consisting of alkylsilanes, alkoxysilanes, organoalkoxysilyl polysulfides and organomercaptoalkoxysilanes.

One component of the rubber composition is from 20 to 90 phr of a solution polymerized styrene-butadiene rubber. The solution polymerization prepared SBR (S-SBR) typically has a bound styrene content in a range of 5 to 50, preferably 9 to 40, percent. The S-SBR can be conveniently prepared, for example, by organo lithium catalyzation in the presence of an organic hydrocarbon solvent.

In one embodiment, the solution polymerized styrene-butadiene rubber is functionalized with a functional group. Functional groups incorporated into the styrene-butadiene rubbers may include amine groups, siloxy groups, sulfide groups, hydroxy groups, epoxy groups, nitroso groups, and combinations thereof.

Representative of amine functionalized SBR elastomers are, for example, inchain functionalized SBR elastomers mentioned in US-B- 6,936,669.

Representative of a combination of amino-siloxy functionalized SBR elastomers with one or more amino-siloxy groups connected to the elastomer is, for example, HPR355™ from JSR and amino-siloxy functionalized SBR elastomers mentioned in US-B- 2007/0185267.

Representative styrene/butadiene elastomers end functionalized with a silane-sulfide group are, for example, mentioned in WO-A- 2007/047943 patent publication. and available as Sprintan® SLR 4602 from Styron.

Representative of hydroxy functionalized SBR elastomers is, for example, Tufdene 3330™ from Asahi.

Representative of epoxy functionalized SBR elastomers is, for example, Tufdene E50™ from Asahi.

A second component of the rubber composition is from 10 to 80 phr of polybutadiene rubber.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The polybutadiene rubber contains from 10 to 20 phr of syndiotactic polybutadiene rubber, with the balance of the polybutadiene made up of cis 1,4-polybutadiene rubber.

In one embodiment, the syndiotactic 1,2-polybutadiene (SPBD) has at least 70 percent of its monomeric units in a syndiotactic 1,2-configuration. In one embodiment, the SPBD has at least 90 percent of its monomeric units in the syndiotactic 1,2-configuration. The SPBD will generally have a melting point ranging from 150°C to 220°C. In most cases, it is preferable for the SPBD to have a melting point of at least 180°C and it is more preferable for the SPBD to hav e a melting point of at least 200°C.

A third component of the rubber composition is from 50 to 150 phr of pre-hydrophobated precipitated silica. By pre-hydrophobated, it is meant that the silica is pretreated, i.e., the pre-hydrophobated precipitated silica is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes.

In an alternative embodiment, the precipitated silica may be pre-treated with a silica coupling agent comprised of, for example, an alkoxyorganomercaptosilane or combination of alkoxysilane and alkoxyorganomercaptosilane prior to blending the pre-treated silica with the rubber instead of reacting the precipitated silica with the silica coupling agent in situ within the rubber. For example, see US-B- 7,214,731.

For various pre-treated precipitated silicas see, for example, US-A- 4,704,414, US-B- 6,123,762 and US-B- 6,573,324.

The rubber composition may optionally include one or more additional rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom

Alternatively, the rubber composition may include a combination of processing oil and a resin plasticizer. In one embodiment, the rubber composition includes from 1 to 50 phr of processing oil, and 1 to 50 phr of resin, up to a total amount of 70 phr of oil and resin.

The resin selected from the group consisting of hydrocarbon resins, phenol/acetylene resins, rosin derived resins and mixtures thereof.

Representative hydrocarbon resins include coumarone-indene-resins, petroleum resins, terpene polymers, alphamethyl styrene resins and mixtures thereof.

Coumarone-indene resins are commercially available in many forms with melting points ranging from 10 to 160°C (as measured by the ball-and-ring method). Preferably, the melting point ranges from 30 to 100°C. Coumaro ne-indene resins are well known. Various analysis indicate that such resins are largely polyindene; however, typically contain random polymeric units derived from methyl indene, coumarone, methyl coumarone, styrene and methyl styrene.

Petroleum resins are commercially available with softening points ranging from 10°C to 120°C. Preferably, the softening point ra nges from 30 to 100°C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene.

Terpene polymers are commercially produced from polymerizing a mixture of beta pinene in mineral spirits. The resin is usually supplied in a variety of melting points ranging from 10°C to 135°C.

Phenol/acetylene resins may be used. Phenol/acetylene resins may be derived by the addition of acetylene to butyl phenol in the presence of zinc naphthlate. Additional examples are derived from alkylphenol and acetylene.

Resins derived from rosin and derivatives may be used in the present invention. Gum and wood rosin have much the same composition, although the amount of the various isomers may vary. They typically contain 10 percent by weight neutral materials, 53 percent by weight resin acids containing two double bonds, 13 percent by weight of resin acids containing one double bond, 16 percent by weight of completely saturated resin acids and 2 percent of dehydroabietic acid which contains an aromatic ring but no unsaturation. There are also present 6 percent of oxidized acids. Representative of the diunsaturated acids include abietic acid, levopimaric acid and neoabietic acid. Representative of the monounsaturated acids include dextroplmaris acid and dihydroabietic acid. A representative saturated rosin acid is tetrahydroabietic acid.

In one embodiment, the resin derived from styrene and alphamethylstyrene. It is considered that, in one aspect, its glass transition temperature (Tg) characteristic combined with its molecular weight (Mn) and molecular weight distribution (Mw/Mn) provides a suitable compatibility of the resin in the rubber composition, the degree of compatibility being directly related to the nature of the rubber composition.

The presence of the styrene/alphamethylstyrene resin with a rubber blend which contains the presence of the styrene-butadiene elastomer is considered herein to be beneficial because of observed viscoelastic properties of the tread rubber composition such as complex and storage modulus, loss modulus tan.delta and loss compliance at different temperature/frequency/strain as hereinafter generally described.

The properties of complex and storage modulus, loss modulus, tan.delta and loss compliance are understood to be generally well known to those having skill in such art. They are hereinafter generally described.

The molecular weight distribution of the resin is visualized as a ratio of the resin's molecular weight average (Mw) to molecular weight number average (Mn) values and is considered herein to be in a range of 1.5/1 to 2.5/1 which is considered to be a relatively narrow range. This believed to be advantageous because of the selective compatibility with the polymer matrix and because of a contemplated use of the tire in wet and dry conditions over a wide temperature range.

The glass transition temperature Tg of the copolymer resin is considered herein to be in a range of 20°C to 100°C, alternatively 30 °C to 80°C, depending somewhat upon an intended use of the prepared tire and the nature of the polymer blend for the tire tread.

The styrene/alphamethylstyrene resin is considered herein to be a relatively short chain copolymer of styrene and alphamethylstyrene with a styrene/alphamethylstyrene molar ratio in a range of 0.40 to 1.50. In one aspect, such a resin can be suitably prepared, for example, by cationic copolymerization of styrene and alphamethylstyrene in a hydrocarbon solvent.

Thus, the contemplated styrene/alphamethylstyrene resin can be characterized, for example, by its chemical structure, namely, its styrene and alphamethylstyrene contents and softening point and also, if desired, by its glass transition temperature, molecular weight and molecular weight distribution.

In one embodiment, the styrene/alphamethylstyrene resin is composed of 40 to 70 percent units derived from styrene and, correspondingly, 60 to 30 percent units derived from alphamethylstyrene. In one embodiment, the styrene/alphamethylstyrene resin has a softening point according to ASTM No. E-28 in a range of 80°C to 145°C.

In addition to the pre-hydrophobated silica, the rubber composition may include an untreated, or non-prehydrophated precipitated silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243 silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-B-6,242,534; US-B- 6,207,757; US-B- 6,133,364; US-B- 6,372,857; US-A- 5,395,891; or US-B- 6,127,488, and plasticized starch composite filler including that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Q-Alk-Sₙ-Alk-Q I

in which Q is selected from the group consisting of 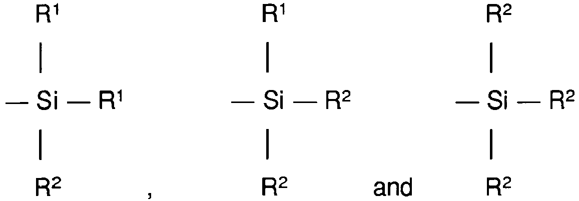 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Q may be 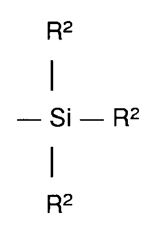 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1.

In this example, a rubber composition according to the present invention is illustrated. Rubber compounds were mixed following compositions shown in Table 1. The compounds were mixed in a three-step mix process using standard amounts of curatives and processing aids.

Mixed compound samples were tested for various physical properties, with results as shown in Table 2.

As seen in Tables 1 and 2, use of prehydrophobated silica resulted in an improvement in rolling resistance as indicated by the decreased tan delta in Sample 2 as compared with Sample 1, but also resulting in a reduction in tensile modulus. Combination of prehydrophobated silica and syndiotactic polybutadiene maintained the decreased tan delta, along with an increase in the modulus as seen in Sample 4 compared with Sample 2.

**Table 1**

| Sample | 1 | 2 | 3 | 4 | 5 | 6 | 7 | 8 | 9 | 10 |
|---|---|---|---|---|---|---|---|---|---|---|
| SBR¹ | 70 | 70 | 70 | 70 | 70 | 70 | 70 | 70 | 70 | 70 |
| PBD² | 30 | 30 | 0 | 0 | 15 | 0 | 15 | 0 | 15 | 30 |
| SPBD12³ | 0 | 0 | 30 | 30 | 15 | 0 | 0 | 30 | 15 | 0 |
| SPBD17⁴ | 0 | 0 | 0 | 0 | 0 | 30 | 15 | 0 | 0 | 0 |
| Silica⁵ | 86 | 0 | 86 | 0 | 0 | 0 | 0 | 26 | 26 | 26 |
| CTS⁶ | 0 | 86 | 0 | 86 | 86 | 86 | 86 | 60 | 60 | 60 |
| Silane⁷ | 6.8 | 0 | 6.8 | 0 | 0 | 0 | 0 | 2.06 | 2.06 | 2.06 |

| | | | | | | | | | | |
|---|---|---|---|---|---|---|---|---|---|---|
| ¹ Styrene-butadiene rubber, solution polymerized. ² Polybutadiene as Budene 1207 from The Goodyear Tire & Rubber Company ³ Polybutadiene rubber containing 12 percent by weight of syndiotactic polybutadiene, as VCR417 from Ube Industries ⁴ Polybutadiene rubber containing 17 percent by weight of syndiotactic polybutadiene, as VCR617 from Ube Industries ⁵ Precipitated silica ⁶ Silica prehydrophobated with silane, as Agilon 400 from PPG ⁷ bis(triethoxypropylsilyl) polysulfide, 50% on carbon black | | | | | | | | | | |

**Table 2**

| Sample | 1 | 2 | 3 | 4 | 5 | 6 | 7 | 8 | 9 | 10 |
|---|---|---|---|---|---|---|---|---|---|---|
| **MDR 2000** | | | | | | | | | | |
| Min S', dN-m | 3.85 | 3.45 | 4.53 | 3.68 | 3.53 | 3.43 | 3.52 | 3.90 | 4.12 | 3.69 |
| Max S', dN-m | 23.11 | 15.83 | 26.46 | 17.33 | 16.46 | 16.84 | 16.31 | 19.04 | 18.95 | 18.18 |
| Delta S', dN-m | 19.26 | 12.38 | 21.93 | 13.65 | 12.93 | 13.41 | 12.79 | 15.14 | 14.83 | 14.49 |
| T50, min | 2.80 | 0.98 | 2.87 | 0.94 | 0.96 | 0.93 | 0.94 | 1.44 | 1.41 | 1.44 |
| T90, min | 5.88 | 1.79 | 6.82 | 1.84 | 1.78 | 1.79 | 1.75 | 2.89 | 2.71 | 2.69 |
| **RPA 2000** | | | | | | | | | | |
| **uncured** | | | | | | | | | | |
| G' (1 %), MPa | 0.471 | 0.325 | 0.642 | 0.368 | 0.344 | 0.343 | 0.332 | 0.426 | 0.423 | 0.370 |
| TanDelta (1%) | 0.490 | 0.419 | 0.476 | 0.398 | 0.411 | 0.400 | 0.420 | 0.376 | 0.383 | 0.397 |
| **cured** | | | | | | | | | | |
| G' (1 %), MPa | 3.49 | 1.49 | 4.49 | 1.76 | 1.63 | 1.71 | 1.59 | 2.20 | 2.10 | 1.97 |
| G' (10%), MPa | 1.14 | 0.90 | 1.32 | 1.04 | 0.96 | 1.01 | 0.95 | 1.14 | 1.09 | 1.05 |
| TanDelta (1%) | 0.096 | 0.062 | 0.093 | 0.063 | 0.061 | 0.061 | 0.061 | 0.072 | 0.074 | 0.071 |
| TanDelta (10) | 0.156 | 0.100 | 0.166 | 0.099 | 0.102 | 0.097 | 0.102 | 0.112 | 0.097 | 0.090 |
| **Tensile Properties** | | | | | | | | | | |
| Elongation, % | 381 | 322 | 320 | 285 | 302 | 268 | 311 | 273 | 277 | 299 |
| Mod 100, MPa | 2.75 | 2.47 | 3.45 | 3.34 | 2.84 | 3.15 | 2.83 | 3.52 | 3.31 | 2.85 |
| Mod 200, MPa | 7.20 | 7.10 | 8.73 | 9.28 | 8.10 | 8.90 | 8.12 | 9.53 | 9.13 | 8.08 |
| Rebound, % | 34.18 | 40.38 | 31.24 | 36.58 | 38.79 | 37.39 | 38.71 | 34.10 | 36.26 | 38.38 |
| Shore A | 70.20 | 62.70 | 73.80 | 66.30 | 64.30 | 65.10 | 63.90 | 68.20 | 67.60 | 65.40 |
| Tens Str, MPa | 15.58 | 12.66 | 14.19 | 13.21 | 12.78 | 11.68 | 13.43 | 12.73 | 12.49 | 12.60 |

## Claims

1. A rubber composition for use in a tire tread, the rubber composition comprising:
from 20 to 90 parts by weight per 100 parts by weight of rubber (phr) of a solution polymerized styrene-butadiene rubber;
from 10 to 80 phr of a polybutadiene rubber, wherein from 0 to 20 weight percent of the polybutadiene rubber is a syndiotactic polybutadiene rubber comprising at least 70 percent of monomeric units in syndiotactic 1,2 configuration and the balance of the polybutadiene rubber comprises at least 90 percent of monomeric units in cis-1,4 configuration; and
from 50 to 150 phr of pre-hydrophobated silica, preferably precipitated silica, wherein the pre-hydrophobated silica is hydrophobated prior to its addition to the rubber composition by treatment with at least one silane selected from the group consisting of alkylsilanes, alkoxysilanes, organoalkoxysilyl polysulfides and organomercaptoalkoxysilanes, **characterized in that**
the polybutadiene rubber contains from 10 to 20 phr of syndiotactic polybutadiene rubber, with the balance of the polybutadiene made up of cis 1,4-polybutadiene rubber.

2. The rubber composition of claim 1, wherein the solution polymerized styrene-butadiene rubber is functionalized with a functional group selected from amine groups, siloxy groups, sulfide groups, hydroxy groups, nitroso groups, and epoxy groups.

3. The rubber composition of at least one of the previous claims, wherein the silane is an alkoxyorganomercaptosilane.

4. The rubber composition of at least one of the previous claims, wherein the silane is a combination of alkoxysilane and alkoxyorganomercaptosilane.

5. The rubber composition of at least one of the previous claims, wherein the syndiotactic 1,2-polybutadiene has at least 70 percent of its monomeric units in a syndiotactic 1,2-configuration.

6. The rubber composition of at least one of the previous claims wherein the syndiotactic 1,2-polybutadiene has at least 90 percent of its monomeric units in the syndiotactic 1,2-configuration.

7. The rubber composition of at least one of the previous claims, wherein the syndiotactic 1,2-polybutadiene has a melting point in a range of from from 150 °C to 220 °C.

8. The rubber composition of at least one of the previous claims, wherein the syndiotactic 1,2-polybutadiene has a melting point of at least 180 °C.

9. The rubber composition of at least one of the previous claims, wherein the syndiotactic 1,2-polybutadiene has a melting point of at least 200 °C.

10. A tire tread comprising the rubber composition in accordance with at least one of the previous claims.

11. A pneumatic tire having a tread in accordance with claim 10.

## Patentansprüche

1. Kautschukzusammensetzung zur Verwendung in einer Reifenlauffläche, wobei die Kautschukzusammensetzung umfasst:
20 bis 90 Gewichtsteile je 100 Gewichtsteile Kautschuk (phr) eines lösungspolymerisierten Styrol-Butadien-Kautschuks;
10 bis 80 phr eines Polybutadienkautschuks, wobei 0 bis 20 Gewichtsprozent des Polybutadienkautschuks ein syndiotaktischer Polybutadienkautschuk ist, der mindestens 70 Prozent Monomereinheiten in syndiotaktischer 1,2-Konfiguration umfasst, und der Rest des Polybutadienkautschuks mindestens 90 Prozent Monomereinheiten in cis-1,4-Konfiguration umfasst; und
50 bis 150 vor-hydrophobiertes Silika, bevorzugt ausgefälltes Silika, wobei das vor-hydrophobierte Silika vor seinem Zusatz zu der Kautschukzusammensetzung hydrophobiert wird durch Behandlung mit mindestens einem Silan, ausgewählt aus der aus Alkylsilanen, Alkoxysilanen, Organoalkoxysilylpolysulfiden und Organomercaptoalkoxysilanen bestehenden Gruppe, **dadurch gekennzeichnet, dass**
der Polybutadienkautschuk 10 bis 20 phr syndiotaktischen Polybutadienkautschuk enthält, wobei der Rest des Polybutadiens aus cis-1,4-Polybutadienkautschuk besteht.

2. Kautschukzusammensetzung nach Anspruch 1, wobei der lösungspolymerisierte Styrol-Butadien-Kautschuk mit einer funktionellen Gruppe funktionalisiert ist, ausgewählt aus Amingruppen, Siloxygruppen, Sulfidgruppen, Hydroxygruppen, Nitrosogruppen und Epoxygruppen.

3. Kautschukzusammensetzung nach mindestens einem der vorhergehenden Ansprüche, wobei das Silan ein Alkoxyorganomercaptosilan ist.

4. Kautschukzusammensetzung nach mindestens einem der vorhergehenden Ansprüche, wobei das Silan eine Kombination von Alkoxysilan und Alkoxyorganomercaptosilan ist.

5. Kautschukzusammensetzung nach mindestens einem der vorhergehenden Ansprüche, wobei das syndiotaktische 1,2-Polybutadien mindestens 70 Prozent seiner Monomereinheiten in einer syndiotaktischen 1,2-Konfiguration aufweist.

6. Kautschukzusammensetzung nach mindestens einem der vorhergehenden Ansprüche, wobei das syndiotaktische 1,2-Polybutadien mindestens 90 Prozent seiner Monomereinheiten in der syndiotaktischen 1,2-Konfiguration aufweist.

7. Kautschukzusammensetzung nach mindestens einem der vorhergehenden Ansprüche, wobei das syndiotaktische 1,2-Polybutadien einen Schmelzpunkt im Bereich von 150°C bis 220°C aufweist.

8. Kautschukzusammensetzung nach mindestens einem der vorhergehenden Ansprüche, wobei das syndiotaktische 1,2-Polybutadien einen Schmelzpunkt von mindestens 180°C aufweist.

9. Kautschukzusammensetzung nach mindestens einem der vorhergehenden Ansprüche, wobei das syndiotaktische 1,2-Polybutadien einen Schmelzpunkt von mindestens 200°C aufweist.

10. Reifenlauffläche, umfassend die Kautschukzusammensetzung gemäß mindestens einem der vorhergehenden Ansprüche.

11. Luftreifen mit einer Lauffläche gemäß Anspruch 10.

## Revendications

1. Composition de caoutchouc pour son utilisation dans une bande de roulement de bandage pneumatique, la composition de caoutchouc comprenant :
de 20 à 90 parties en poids par 100 parties en poids de caoutchouc (phr) d'un caoutchouc de styrène-butadiène polymérisé en solution ;
de 10 à 80 phr d'un caoutchouc de polybutadiène, dans lequel de 0 à 20 % en poids du caoutchouc de polybutadiène représentent un caoutchouc de polybutadiène syndiotactique comprenant au moins 70 % des unités monomère dans la configuration syndiotactique 1,2, le reste du caoutchouc de polybutadiène comprenant au moins 90 % des unités monomères dans la configuration cis 1,4 ; et
de 50 à 150 phr d'une silice soumise à un traitement préalable pour la rendre hydrophobe, de préférence une silice précipitée, la silice soumise à un traitement préalable pour la rendre hydrophobe étant rendue hydrophobe avant son addition à la composition de caoutchouc par traitement avec au moins un silane choisi parmi le groupe constitué par des alkylsilanes, des alcoxysilanes, des organoalcoxysilyl polysulfures et des organomercaptoalcoxysilanes, **caractérisée en ce que**
le caoutchouc de polybutadiène contient de 10 à 20 phr d'un caoutchouc de polybutadiène syndiotactique, le reste du polybutadiène étant constitué d'un caoutchouc de cis 1,4 polybutadiène.

2. Composition de caoutchouc selon la revendication 1, dans laquelle le caoutchouc de styrène-butadiène polymérisé en solution est fonctionnalisé avec un groupe fonctionnel choisi parmi des groupes amine, des groupes siloxy, des groupes sulfure, des groupes hydroxy, des groupes nitroso et des groupes époxy.

3. Composition de caoutchouc selon au moins une des revendications précédentes, dans laquelle le silane est un alcoxyorganomercaptosilane.

4. Composition de caoutchouc selon au moins une des revendications précédentes, dans laquelle le silane est une combinaison d'un alcoxysilane et d'un alcoxyorganomercaptosilane.

5. Composition de caoutchouc selon au moins une des revendications précédentes, dans laquelle le 1,2-polybutadiène syndiotactique possède au moins 70 % de ses unités monomères dans une configuration syndiotactique 1,2.

6. Composition de caoutchouc selon au moins une des revendications précédentes, dans laquelle le 1,2-polybutadiène syndiotactique possède au moins 90 % de ses unités monomères dans une configuration syndiotactique 1,2.

7. Composition de caoutchouc selon au moins une des revendications précédentes, dans laquelle le 1,2-polybutadiène syndiotactique possède un point de fusion qui se situe dans la plage de 150 °C à 220 °C.

8. Composition de caoutchouc selon au moins une des revendications précédentes, dans laquelle le 1,2-polybutadiène syndiotactique possède un point de fusion s'élevant à au moins 180 °C.

9. Composition de caoutchouc selon au moins une des revendications précédentes, dans laquelle le 1,2-polybutadiène syndiotactique possède un point de fusion s'élevant à au moins 200 °C.

10. Bande de roulement de bandage pneumatique comprenant la composition de caoutchouc selon au moins une des revendications précédentes.

11. Bandage pneumatique possédant une bande de roulement selon la revendication 10.
